# EUROPEAN PATENT SPECIFICATION

(11) **EP 1 393 520 B1**
(45) Date of publication and mention of the grant of the patent: **15.07.2009**
(21) Application number: 02730468.2
(22) Date of filing: 30.05.2002
(51) Int. Cl.: H04L 29/06, H04L 12/28

(54) **Security in area networks**
Sicherheit in netzwerken
Sécurité dans des réseaux sectoriels

(30) Priority: 07.06.2001 GB 0113901
(43) Date of publication of application: 03.03.2004
(73) Proprietor: Nokia Corporation, 02150 Espoo (FI)
(72) Inventor: EDNEY, Jonathan, Willingham, Cambridgeshire CB4 5ES (GB); HAVERINEN, Henry, FIN-33720 Tampere (FI)
(74) Representative: Ruuskanen, Juha-Pekka
(86) International application number: PCT/GB2002/002561
(87) International publication number: WO 2002/100038

(56) References cited:
- WO-A-00/52575
- WO-A-01/37517

## Description

The invention relates generally to the field of computer networks, and in particular to the field of area networks.

A computer network can be defined as a group of two or more computer systems linked together. In this definition, a computer system is taken to mean a complete working computer, including not only the computer, but also any software or peripheral devices that are necessary to make the computer function. For example, every computer system requires an operating system and printing devices are generally required to provide hard copies of computerised information.

Computer networks can be categorised in a number of ways, for example, in terms of topology (geometric arrangement of devices in a network e.g. bus, star and ring), media (the means by which devices are connected e.g. coaxial/fibre optic cables or radio waves), protocol (a common set of rules for sending data e.g. Ethernet), or architecture (peer/peer or client/server). It is possible that the protocols also determine whether the computer network uses peer/peer or client/server architecture and thus such simple categorisation often leads to a computer network falling into more than one category.

In addition to the above mentioned categories, computer networks can be grouped in terms of a geographical region over which the network is distributed. Such a categorisation leads to the category of Area Network, and includes Local Area Networks (LANs), Wide Area Networks (WANs) and Metropolitan Area Networks (MANs). In the case of LANs, the computers in the network are geographically close together, for example, in a single building or group of buildings. In the case of WANs, the computers are farther apart and are connected by telephone lines or radio waves. One LAN can be connected to other LANs over any distance via telephone lines and/or radio waves to also provide a WAN. A MAN is a network designed for towns and cities.

The present invention relates to the field of area networks and includes all the above mentioned area networks. In addition, as such simple categorisation often leads to a computer network falling into more than one category, it is important to note that the present invention does not exclude applicability in networks which also fall into other network categories. Thus, the present invention relates to area networks regardless of the topology, media, protocol or architecture of the network. The present invention is also applicable to Wireless Local Area Networks (WLAN or LAWN), a sub-class of LANs which use high frequency radio waves rather than wires for communication between certain network devices.

Area networks have been designed to enable several computers to be connected together in order to share information and resources. The network protocols, operating systems and application software for the associated network computers have been designed on the assumption that it is intended that two or more computers on the same area network can share information and be notified of each others existence on the network. Such an arrangement is only suitable for situations in which users (clients) of the area network have business/personal relationships. However, there are opportunities to use the advantages provided by area networks, and LANs in particular, in situations where clients have no personal/business relationships (e.g. in a public area network). One example of such an application is an airport business lounge in which a LAN/WLAN may be provided to allow passengers (clients) to access the Internet, whilst at the same time preventing access to another passenger's computer connected to the same LAN/WLAN.

In such security sensitive applications, where clients are often new to a network and have no prior business or personal relation with each other or the network, it is desirable that communications, in the form of transmitted data packets, are maintained private (i.e. the isolation of one client's transmissions from another client) whilst still providing ease of network access to such users, ideally using commonly used communication protocols. Some degree of control also needs to be provided over client access to the network and the duration of that access.

Taking the access control requirement first, this can be achieved by mediating area networks transmissions by one or more controlling computers, commonly known as Access Controllers (ACs), designed to monitor and control network usage. These are provided at a position in the network architecture to receive client data packets without the data packets first travelling too far through the network. Such positions are architecturally immediately following access point devices, the access point devices being provided to allow client device access to the network. Thus, the effective functioning of ACs in present solutions is architecture dependent i.e. the prevention of transmissions bypassing the AC is by the architectural design of the network.

With regard to security, security efforts in existing LANs have resulted in area networks arranged to only allow transmission of data packets from network recognised client computers. This may be done by arranging either the access point device or the AC to consider a unique client device classifier (e.g. MAC address) or authorisation code (e.g. password) transmitted by the client device as part of the transmission data packet. However, such arrangements only check whether a client device is authorised to access the network and do not consider whether the device to which access is being requested is permitted. So, this solution, in isolation, does not necessarily prevent someone who is authorised to use the network, or has altered their device so that it provides a client device classifier or authorisation code recognised by the network, from obtaining access to private areas of the network.

The aforementioned consideration of whether the client device is permitted access to the network also has other disadvantages. Generally speaking, communications between devices may be by means of unicast (between specific identified singular devices, "point to point"), multicast (between one or more devices and a set of specific identified devices) or broadcast (between a single device and one or more non-specific devices) transmissions. Disadvantageously, the consideration of whether the client device is permitted access to the network does not prevent a multicast/broadcast transmission from a network recognised client device from permeating throughout the area network, and accordingly this has implications on client privacy. In addition, it may be that a number of network recognised client devices are connected to the area network using the same access point device. It is currently possible for such client devices to communicate with each other by unicast/multicast/broadcast transmissions passing through the common access point device without the transmissions having to enter into the core of the area network. Such transmission paths bypass network devices in the core of the network and thus inhibit control and monitoring of network access and usage. Client privacy may be also reduced, in particular, by the receipt of unsolicited multicast/broadcast transmissions from neighbouring client devices. Furthermore, as has been mentioned previously, the effective functioning of ACs in present networks is architecture dependent. Therefore, unless the ACs are suitably positioned, it is also possible in current network arrangements for client devices connected to adjacent access point devices to communicate with one another using unicast/multicast/broadcast transmissions which bypass the AC.

The Internet Protocol version 4 (lPv4), in particular, is a widely used communications protocol which allows the use of Address Resolution Protocol (ARP) to resolve a target node's, for example a client or network device, link-layer address from its IP address. In fact, ARP does not operate over IPv4 but ARP packets are special link-layer packets. In the normal use of ARP, a node, such as a client device, that needs to resolve the link-layer address that corresponds to a target IP address broadcasts an ARP Request. When the target node, such as an AC, recognises that its link-layer address is being queried with an ARP Request, it unicasts an ARP Reply to the sender of the ARP Request.

A number of forms of ARP exist. A Gratuitous ARP is an ARP packet sent by a node in order to spontaneously cause other nodes to update an entry in their ARP table. It can be used for example if the link-layer address changes. The ARP specification requires that any node receiving any ARP packet must update its local ARP table with the sender's IP and link-layer addresses in the ARP packet, if the receiving node has an entry for that IP address already in its ARP table. This requirement in the ARP protocol applies even for ARP Request packets, and for ARP Reply packets that do not match any ARP Request transmitted by the receiving node. Another form of ARP is Proxy ARP in which a ARP Reply is sent by one node on behalf of another node which is either unable or unwilling to answer its own ARP Requests. The sender of a Proxy ARP supplies some configured link-layer address (generally, its own) as the target link-layer address. The node receiving the Proxy ARP will then associate this link-layer address with the IP address of the original target node. A Reverse Address Resolution Protocol (RARP) can be used to resolve an IP address from a link-layer address.

Clients using a WLAN, in particular, need to be able to use ARP in order to send and receive unicastl P packets. However, ARP does not have any built-in security and free use by clients, would provide opportunities for a malicious client to disturb the operation of the access network. For example, a malicious client could alter the ARP tables of all the nodes on the network simply by broadcasting a false gratuitous ARP packet on behalf of the access router.

WO-A-00/52575 discloses a system for local distributed security for a computer connected to a network. The network transmits packets to and from the computer. The system includes a local security device for connecting the computer to the network and for examining each packet to determine where the packet is received by the computer according to one or more rules. The system also includes a security agent for determining the rules for the local security device.

WO-A-01/37517 discloses a system and method for providing access and/or roaming features on a network system. The network system includes a plurality of wireless and/or wired access points coupled to a network. Access points for the network may be widely distributed in various facilities, such as airports, mass transit stations, and various businesses. The network may couple to a wide area network, such as the internet. The access points determine identification information from client devices and provide access to an appropriate provider in accordance with the identification information.

The present invention aims to address the previously mentioned shortfalls of the prior art.

Accordingly, in a first aspect, the present invention provides an access point device arranged to receive data packets from a plurality of client devices and transmit them along a public area network wherein the access point device comprises security means arranged to consider the source/destination of data packets and control the forwarding/discarding of a data packet according to whether the data packet originates from a client device and is destined for a client device wherein the security means is configured to send a reply data packet back to the client device in response to a data packet destined for a non-permitted network device and not forward the data packet destined for the non-permitted network device into the public area network, and wherein the security means is configured to differentiate between data packet transmission forms, transmission forms being unicast, multicast, or broadcast transmission forms, to selectively control access of certain transmission forms into the public area network.

According to a second aspect of the present invention there is provided a method of providing security to a public area network, the method being performed in an access point device, the method comprising arranging to receive data packets from a plurality of client devices in order to transmit them along the public area network wherein the source/destination of data packets are considered to control the forwarding/discarding of a data packet according to whether the data packet originates from a client device and is destined for a client device, differentiating between data packet transmission forms, transmission forms being unicast, multicast or broadcast transmission forms, to selectively control access of certain transmission forms into the public area network, and sending a reply data packet back to the client device in response to a data packet destined for a non-permitted network device and not forwarding the data packet destined for the non-permitted network device into the public area network.

The invention considers the source/destination of client data packets in a public area network and controls client-client transmissions. With the solution being provided solely by an improved access point device, the present invention can be easily and cost effectively retro-actively fitted to existing area networks. The solution is also relatively simple and thus un-complicated.

Transmissions along the area network may include transmissions to/from/within the wired and/or wireless parts of the area network, Including transmissions which do not significantly enter the wired part of the network e.g. in certain cases when two or more client devices are connected to the same access point device.

In a simple case, the invention may be arranged to exclude unicast transmissions between client devices by considering the source/destination classifier information contained in a transmitted data packet. For example, the security means may contain a list of classifiers for client devices and if a client data packet contains a specific destination classifier of a client device, the data packet discarded. The classifier is essentially the address of a device and may be the hardware address of the device (e.g. MAC address contained in the data link-layer of the communications protocol) or a corresponding software address for the device (e.g. contained in the network/applications layer of the communications protocol). Generally speaking, the classifier may be in any of the layers of the communications protocol used by the network. More complicated embodiments may analyse this and/or other aspects of the data packet to determine whether a client data packet is destined for a client device.

The security means is configured to differentiate between data packet transmission forms to selectively control access of certain transmission forms into the public area network. For example, it will be possible with this embodiment to identify whether the data packet is of a unicast, multicast, or broadcast transmission form, or even what particular form of unicast, multicast, or broadcast transmission (e.g. gratuitous ARP), and accordingly allow certain transmission forms access to the network based on local policy considerations. For example, it may be decided that multicast transmissions to client devices are to be allowed on the network. This can be conveniently done by comparing one or more data packet data fields, or parts of data fields with fields for network permissible transmission forms and forwarding those data packets which match the fields, or parts of fields, of a network permissible form. The data fields may be contained in any layer of the network communications protocol and may include the link-layer header, the IP header, and the transport protocol headers (UDP and TCP). Accordingly, transmission of the data packet is only allowed if the data fields correspond with those of a permissible form. Otherwise, the transmission form is excluded from the network.

As an example, a Dynamic Host Configuration Protocol (DHCP) data packet can be recognised by observing that the data packet is an IP packet that encapsulates UDP and the destination port field contains the value 67, and thus data packets recognised as using this protocol may be permitted access to the network. Whether to permit or deny access to the network for certain forms of transmissions will be based on local policy considerations.

In a modified embodiment, the access point device may be configured to send a reply data packet back to the client device in response to a particular form of data packet transmission from the client device and/or in response to a data packet destined for a non-permitted (restricted) network device. For example, the access point device may send a Proxy ARP reply transmission, using an appropriate target link-layer address, back to client device which originated a ARP Request transmission, and at the same time not forward the ARP Request into the network. As the target link-layer address would correspond to a permitted network device, further client transmissions should be unicast transmissions directed to the permitted network device having the appropriate link-layer address. Alternatively, the access point device may be configured to simply send a reply data packet informing the client that such forms of transmission are not permitted, or are restricted, on the area network.

The access point device may be arranged to reply on behalf of a network device, preferably a restricted network device. The access point device may comprise security means arranged to provide mapping information of one or more permitted network devices to a client device in response to a client data packet concerning a restricted network device.

Client data packets concerning a restricted network device are not limited to client data packets specifically addressed to one or more restricted devices but may include client data packets which would be received by a restricted network device (and possibly also permitted network devices) e.g. a broadcast transmission in the case of an ARP request.

Specifically, the security means may be arranged to send an ARP transmission back to a client device in response to a data packet destined for a restricted network device.

The access point device may comprise security means arranged to send a proxy ARP Reply transmission back to a client device in response to an ARP request from the client device, said Proxy ARP Reply containing the link-layer address of one or more permitted network devices. The link-layer address may be the MAC address.

Preferably, the security means is configured to accept a unicast ARP Reply from a client device in response to an authorised ARP Request.

In a further embodiment, the security means is configured to modify the data packet for onward transmission based on the original destination of the data packet and/or the transmission form. In certain cases, it may be simpler to completely regenerate a data packet for transmission along the network and discard the original client data packet. However, the configuration is preferably conducted by substituting/inserting a unique classifier of a permitted area network device, such as the access controller MAC address or IP address, into the client data packet. As previously mentioned, the classifier may be contained in any layer of the network communications protocol and thus the modification may be conducted in any appropriate layer of the communications protocol used by the network.

Thus, a unicast transmission directed to a restricted area of the network is modified for transmission to a permitted network device, whereas a unicast transmission directed to a permitted network device is not un-necessarily modified. Furthermore, broadcast/multicast transmissions may be modified into a unicast transmission to a permitted network device, and thus directed away from other client devices connected to the area network. In certain cases, it would be preferable to configure the access point device to also forward the original destination address (or addresses) of the data packet so that the data packet maybe subsequently forwarded to its original destination or destinations. This may be following client authentication or be based on other local policy considerations e.g. the allowance of multicast transmissions to permitted network devices or upon recognition of authorised client devices. In the latter example, the access point device may be configured to seek permission from client devices as to whether the access point device is to forward such forms of transmissions, and in the positive case, the access point device will be configured to forward such transmissions. Thus, the access point device can adapt its local privacy policy based on the wishes of the client. The seeking of permission and/or the forwarding of the transmission may be carried out by a permitted network device, such as an AC.

As a unicast data packet may require a different change in configuration for onward transmission than a multicast/broadcast data packet, the access point device would preferably be arranged to analyse these differing transmission forms and adapt each of these differing forms to provide data packets to the network with the same overall construction and data packet length. In this case, network protocols can remain within industry standards. However, the client data packets may be modified by the insertion of data fields into the data packet. In this case, the data packet will have an increased length and may also have a different construction. In such a case, network devices may require modification to use the modified network transmission protocols and thus the network protocols may not be industry standard devices.

However, it would be most convenient to use a industry standard protocol, such as the internet Protocol (IP) versions 4 or 6, as the communications protocol for the network. Nevertheless, the area network protocol used may be network specific and the access point device provided with means to configure data packets from the area network specific protocol format into an industry standard protocol, and vice versa. In this way, client devices can still operate using an industry standard protocol.

Preferably, the client data packet received by the access point device comprises protocol fields conforming to a standard protocol and wherein the security means is arranged to alter the content of one or more of the protocol fields to produce a modified client data packet which still conforms to a standard protocol. The client data packet received by the access point device and modified client data packet may conform to the same standard protocol. The client data packet received by the access point device and modified client data packet may conform to different standard protocols.

In the case where the area network uses an industry standard protocol, increased security may be provided by configuring the access point device to accept a non-standard protocol for transmissions between the client device and the access point device, and also by providing the access point device with means to configure the non-standard protocol client device transmissions into industry standard protocol transmissions for the area network, and vice versa. In this way, apart from the access point device, the remaining area network devices can be within the scope of industry standards. Of course, the client device would need to be provided with the non-standard protocol, which may be provided in the form of hardware, software or a combination thereof. For example, a client may purchase a PCMCIA card, containing the non-standard protocol, for insertion into their device. If the PCMCIA card allows usage of the area network for a pre-determined time, or at least, is one which monitors the client usage of the network, control and monitoring can be provided over both which clients are authorised to use the area network, and the duration of that usage. Filter means provided in the access point device or the AC may also be modified to analyse whether the client device transmissions are from a client device using an authorised PCMCIA card.

In another embodiment, the security means is configured to consider a characteristic of the data packet and based on the characteristic configure the data packet to be directed to a particular permitted area network device. Thus, this embodiment would differentially modify the data packet destination based on a characteristic of the data packet. Such a characteristic includes a unique classifier for each of the client devices (e. g. MAC address), so that all transmissions from a particular client device are directed to a specific permitted network device. In this version, it is possible to direct all information about usage by a particular client device to one specific vocation, without this information having to be subsequently collated from a number of different permitted network devices.

In a further embodiment, the security means is arranged to monitor the volume of transmissions sent to a particular permitted network device within a particular time and re-direct data packets to a different permitted network device according to the volume of transmissions sent to the particular permitted network device within the time. Such an arrangement allows resource sharing throughout the network so that particular permitted network devices are not overburdened or under-utilised. The access point devices may also be arranged to communicate with one another, and/or the permitted network devices, to determine optimum resource sharing.

The invention may be implemented by hardware, software or a combination thereof. In addition, it may be used in combination with some or all of the aforementioned prior art solutions. For example, the access point device may be configured to comprise authentication means to initially authenticate client devices, by password entry and/or checking the client device classifier contained in the data packet, If the authentication means identifies that the data packet, or more generally the client device, is recognised by the network (i.e. the client device is permitted access to the area network), the data packet is forwarded to the security means.

The invention also encompasses all corresponding methods of providing security to an area network, and area networks comprising the access point devices. All combinations of the aforementioned and subsequently mentioned embodiments of the invention are also within the scope of the invention.

Specific embodiments of the present invention will now be described with reference to the following figures in which :
Figure 1 is a schematic illustration of a portion of a WLAN showing client devices interfacing with the WLAN and showing the closed transmission paths between client devices and the WLAN portion according to the present invention; and
Figure 2 is a schematic illustration of the arrangement of Figure 1 showing the secure permitted transmission paths between client devices and the WLAN portion according to the present invention.

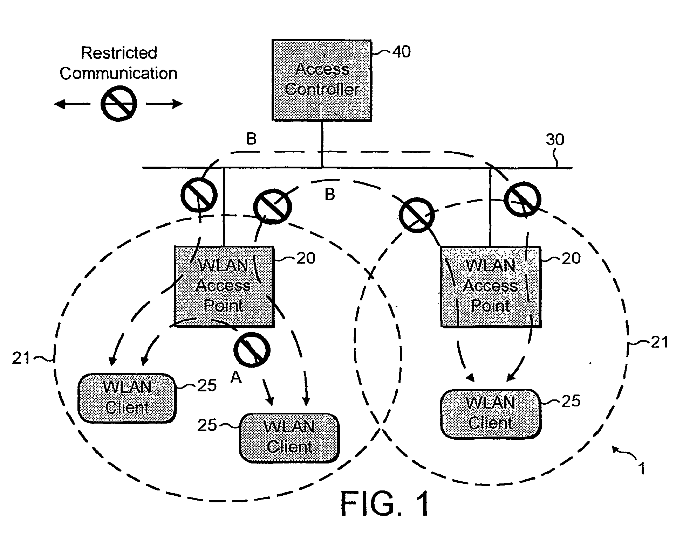

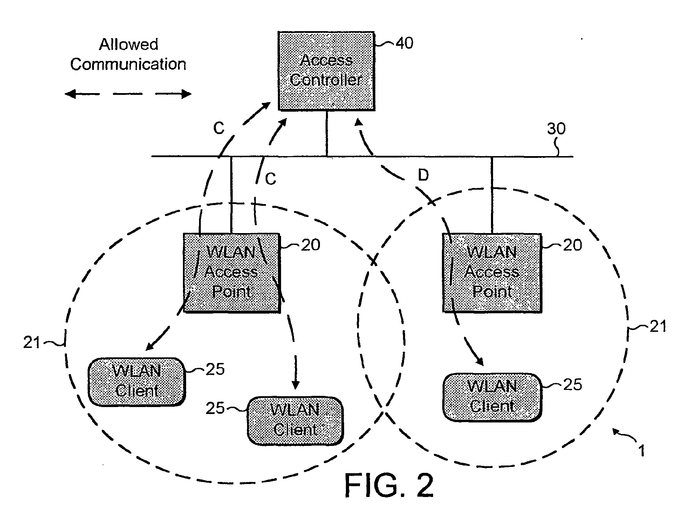

A portion 1 of a typical WLAN is shown in Figures 1 and 2. The WLAN comprises a number of access point devices 20 each having a coverage area 21 over which they can send/receive transmissions to/from one or more client devices 25 (such as laptop computers). There is overlap of adjacent coverage areas 21, and the area network is configured such that one client device 25 can roam and move to an adjacent coverage area 21 without being disconnected from the area network.

The access point devices 20 are each connected to a common transmission line 30. Access controllers 40, designed to control access to the network, are connected to the transmission line 30 at various locations along the length of the transmission line 30. They essentially act as a gateway to the rest of the area network (not shown) by sending/receiving transmissions to/from client devices 25 along transmission line 30. They are also used to configure the network to allow roaming of client devices 25 between adjacent access points devices 20.

It is currently possible for client devices 25 connected to the same access point device 20 to communicate with one another (Figure 1, path A) through the common access point 25 without the transmissions being intercepted by the access controller 40. Such communications may be by unicast, multicast, or broadcast transmissions. It is also possible for client devices 25 connected to adjacent access point devices 20 to communicate with one another (Figure 1, paths B), again by unicast, multicast, or broadcast transmissions, without the transmissions being intercepted by the access controller 40. For example, in the case of a ARP broadcast, a data packet is broadcast to all devices 25 connected to the WLAN. The data packet contains the IP address the sender is interested in communicating with. Most devices 25 ignore the data packet. However, the target device 25, recognises the IP address in the data packet with its own, and returns an answer.

The aim of the invention is to restrict communications to only permitted network devices, and in particular, to restrict those transmissions sent along communication paths A and B (Figure 1). Certain restrictions may also be applied to transmissions along communication paths C, D (Figure 2), between a client device 25 and the access controller 40.

In one embodiment, the access point device 20 is configured to consider both the destination and the transmission form of an incoming client data packet. If the data packet is a unicast transmission directed to a permitted access controller 40, the access point device 20 forwards the client data packet without re-configuration. The access point device is further configured to restrict access of unicast transmissions directed to network restricted access controller 40, or multicast/broadcast transmissions in general. Accordingly, communications are restricted to permitted network devices.

To determine whether the data packet is destined for a network permitted access controller 40, the access point device 20 comprises a list of address for network permitted devices (e.g. IP address or MAC address), which comprises the addresses of a number of permitted access controllers 40. This information may change periodically, and therefore the access point device 20 is configured to be able to update this information. Such an access point device 20 may be modified to also comprise a list of client device MAC addresses corresponding to client devices 25 which are authorised to access the network i.e. they are recognised by the network. This information would also change periodically and thus the access point device 20 is further configured such that this list may be periodically updated.

In the operation of such a modified device, the access point device 20 will initially consider whether the data packet contains the MAC address of a network recognised client device 25. If the data packet is from a network recognised client device, the access point device 20 further considers the destination of the data packet. Then, if the data packet is of the correct form (e.g. unicast) and is also directed to a permitted access controller 40, the data packet is forwarded to the access controller 40.

In one version, the access point device 20 also comprises a list of a number of data fields against which the client data packets are to be compared. The data fields would include MAC multicast address, protocol header offset position, protocol header mask bytes and protocol header match byte. In such a case, the access point device 20 is configured to cross check these fields with those in a received data packet, and based on the analysis determine what to do with the data packet. For example, by analysing the different data packet fields, the access point device 20 can be configured to differentiate between broadcast, multicast and DHCP data packets and accordingly discard all broadcast and multicast transmissions by default, but forward DHCP packets to a local DHCP server.

This consideration of the form of the client data packet and also the original destination of the data packet can be developed to produce further embodiments. This includes configuring the access point device 20 so that it is able to differentially modify client device data packets for onward network transmission based on the form and destination of the original data packet. So, for example, the access point device 20 will be able to re-configure, and thus re-direct, a unicast data packet directed to a network restricted access controller 40, or to another client device 25, to a permitted access controller 40, and also be able to restrict network access generally for a broadcast transmission.

The modification of data packets may even take the form of generating a unicast transmission from a broadcast transmission. For example, in the case of an ARP broadcast from a client device 25, the access point device 20 is arranged to re-configure the data packet so that it includes the IP address (or MAC address) of the access controller 40. The transmission is thus directed only to the permitted access controller 40 and is not generally broadcast throughout the area network. In essence, the access point device 20 configures the broadcast transmission into a unicast transmission. In certain cases, the access controller 40 can be configured to consider whether the ARP broadcast was sent from an authorised client device 25, and in such a case, forward the broadcast transmission throughout the area network. The access controller 40 would, of course, be required to remove the access controller address from the data packet prior to the transmission of the data packet throughout the area network.

In certain embodiments, the access point device 20 is configured to send a proxy ARP transmission back to the client device 25 in response to an ARP request from the client device 25. In this way, the access point device 20 replies on behalf of another device i.e. on behalf of the device which the client device 25 was intending to communicate with. In one example of such an arrangement, the access point device 20 is configured to not forward any broadcast ARP packets received over the WLAN interface. Instead, the access point device 20 discards all received broadcast ARP packets but sends a proxy reply to received ARP Requests using an appropriate target link-layer address of an appropriate router, which in this case is that of the access controller 40. This allows the clients devices 25 to safely resolve target link-layer addresses.

The routers and other servers on the wired part of the WLAN also need to resolve target link-layer addresses of WLAN client devices 25. This is also conveniently done by using ARPing. In this case, the access point device 20 is configured to forward these ARP Requests to the clients devices 25. Since the clients send the corresponding ARP Replies by unicast transmission to an allowed link-layer address, the access point device 20 forwards them just like any other unicast data packets. However, yet better security can be achieved by only allowing the client devices 25 to send unicast ARP Replies in response to ARP Requests. This prevents malicious users from sending unsolicited false unicast ARP Replies (e.g. a gratuitous ARP) to the local routers and servers in order to modify their ARP tables.

In another embodiment, the access point device 20 is configured to be able to send data packets to a number of different access controllers 40, and is configured to determine which access controller 40 the data packet should be sent based on local policy considerations such as resource sharing or billing requirements. For example, in the former case, the access point device 20 is configured to monitor the number of transmissions sent to a particular access controller 40, and if it is considered that the access controller 40 is overburdened, then the access point device 20 re-directs the transmissions to a different access controller 40. In the latter case, the access point device 20 is configured to consider the MAC address contained in a client data packet, and forward all transmissions containing this MAC address to one particular access controller 40.

In summary, the invention provides a means by which authorised communication can be maintained between client devices 25 and one or more permitted network devices (such as the access controller 40) whilst direct communication between the client devices 25 is effectively blocked. If data does not bypass the permitted network devices and is always transferred to them, then accurate billing mechanisms can be provided to keep track of account usage. Increased freedom in the design of network architecture is also enabled by all network transmission being specifically directed to permitted areas of the network. It should be noted that the present invention provides a solution which is based on the destination of data packets. This is contrary to prior art teachings which have considered the source of data packets. In addition, the present invention conveniently and simply addresses the numerous security problems with the disparate prior art solutions.

## Claims

1. An access point device (20) arranged to receive data packets from a plurality of client devices (25) and transmit them along a public area network wherein the access point device (20) comprises security means arranged to consider the source/destination of data packets and control the forwarding/discarding of a data packet according to whether the data packet originates from a client device (25) and is destined for a client device (25), wherein the security means is configured to send a reply data packet back to the client device (25) in response to a data packet destined for a non-permitted network device and not forward the data packet destined for the non-permitted network device into the public area network, and the security means **characterised by** configured to differentiate between data packet transmission forms, transmission forms being unicast, multicast, or broadcast transmission forms, to selectively control access of certain transmission forms into the public area network

2. The access point device (20) according to claim 1, wherein the security means comprises a list of classifiers for client devices (25) and the security means is configured to compare these with the classifier information contained in the client data packet, and discard the data packet if the classifier information corresponds to that contained in the list.

3. The access point device (20) according to any of the preceding claims, wherein the security means is configured to compare one or more data packet data fields, or parts of data fields, with fields for network permissible transmission forms and forward those data packets which match the fields, or parts of fields, of a network permissible form.

4. The access point device (20) according to any preceding claim, wherein the security means is configured to send a reply data packet back to the client device (25) in response to a particular form of data packet transmission from the client device (25).

5. The access point device (20) according to any preceding claim, wherein the access point device (20) is arranged to reply on behalf of a network device.

6. The access point device (20) according to claim 5, wherein the network device is a restricted network device.

7. The access point device (20) according to any preceding claim, wherein the access point device (20) comprises security means arranged to provide mapping information of one or more permitted network devices (40) to a client device (25) in response to a client data packet concerning a restricted network device.

8. The access point device (20) according to claim 7, wherein the security means is arranged to send an ARP transmission back to a client device (25) in response to a data packet destined for a restricted network device.

9. The access point device (20) according to claim 7 or 8, wherein the security means is arranged to send a proxy ARP Reply transmission back to a client device (25) in response to an ARP request from the client device (25), said Proxy ARP Reply containing the link-layer address of one or more permitted network devices (40).

10. The access point device (20) according to claim 9, wherein link-layer address is the MAC address.

11. The access point device (20) according to any preceding claim, wherein the security means is configured to accept a unicast ARP Reply from a client device (25) in response to an authorised ARP Request.

12. The access point device (20) according to any of the preceding claims, wherein the security means is configured to modify the data packet for onward transmission based on the original destination of the data packet.

13. The access point device (20) according to any preceding claim, wherein the security means is configured to modify the data packet for onward transmission based on the transmission form.

14. The access point device (20) according to claim 12 or claim 13, wherein the security means is configured to regenerate a data packet for transmission along the network and to discard the original client data packet.

15. The access point device (20) according to claim 12 or claim 13 wherein the security means is configured to substitute/inserting a classifier of a permitted area network device (40).

16. The access point device (20) according to claims 14 or 15, wherein the security means is configured to also forward the original destination address, or addresses, of the data packet so that the data packet may be subsequently forwarded to its original destination or destinations.

17. The access point device (20) according to any preceding claim, wherein the security means is configured to seek permission from one or more client devices (25) as to whether the access point device (20) is to forward certain transmission forms to the or each client device (25), and in the positive case, the access point device (20) will be configured to forward such transmissions.

18. The access point device (20) according to any preceding claim, wherein the security means is arranged to analyse the differing transmission forms and adapt each of these differing forms to provide data packets to the network with the same overall construction and data packet length.

19. The access point device (20) according to any preceding claim, wherein the client data packet received by the access point device (20) comprises protocol fields conforming to a standard protocol and wherein the security means is arranged to alter the content of one or more of the protocol fields to produce a modified client data packet which still conforms to a standard protocol.

20. The access point device (20) according to claim 19, wherein the client data packet received by the access point device (20) and modified client data packet are conform to the same standard protocol.

21. The access point device (20) according to claim 19, wherein the client data packet received by the access point device (20) and modified client data packet are conform to different standard protocols.

22. The access point device (20) according to any of the preceding claims, wherein the security means is configured to consider a characteristic of the data packet and based on the characteristic configure the data packet to be directed to a particular permitted area network device (40).

23. The access point device (20) according to any of the preceding claims, wherein the security means is arranged to monitor the volume of transmissions sent to a particular permitted network device (40) within a particular time and re-direct data packets to a different permitted network device according to the volume of transmissions sent to the particular permitted network device within the time.

24. The Access point device (20) according to claim 23, wherein one access point device is arranged to communicate with one or more access point devices to determine optimum resource sharing.

25. The access point device (20) according to any of the preceding claims, wherein the security means is configured to accept a non-standard protocol for transmissions between the client device (25) and the access point device (20), and to configure the non-standard protocol client device transmissions into industry standard protocol transmissions for the area network.

26. The access point device (20) according to any preceding claim, wherein the security means is configured to accept a unicast ARP Reply from a client device (25) in response to an authorised ARP Request.

27. A public area network comprising the access point device (20) as claimed in any of the preceding claims.

28. A method of providing security to a public area network, the method being performed in an access point device, the method comprising arranging to receive data packets from a plurality of client devices (25) in order to transmit them along the public area network wherein the source/destination of data packets are considered to control the forwarding/discarding of a data packet according to whether the data packet originates from a client device (25) and is destined for a client device, differentiating between data packet transmission forms, transmission forms being unicast, multicast or broadcast transmission forms, to selectively control access of certain transmission forms into the public area network, and sending a reply data packet back to the client device in response to a data packet destined for a non-permitted network device and not forwarding the data packet destined for the non-permitted network device into the public area network.

## Patentansprüche

1. Zugangspunktgerät (20), das eingerichtet ist, Datenpakete von einer Vielzahl von Client-Geräten (25) zu empfangen und diese entlang eines Netzwerks im öffentlichen Bereich zu übertragen, wobei das Zugangspunktgerät (20) Sicherheitsmittel aufweist, die eingerichtet sind, die/das Quelle/Ziel von Datenpaketen zu berücksichtigen und das Weiterleiten/Verwerfen eines Datenpakets dahingehend zu steuern, ob das Datenpaket von einem Client-Gerät (25) stammt und für ein Client-Gerät (25) bestimmt ist, wobei die Sicherheitsmittel konfiguriert sind, ein Antwortdatenpaket zurück zum Client-Gerät (25) in Reaktion auf ein Datenpaket, das für ein nicht zugelassenes Netzwerkgerät bestimmt ist, zu senden und das Datenpaket, das für das nicht zugelassene Netzwerkgerät bestimmt ist, nicht ins Netzwerk im öffentlichen Bereich weiter zu leiten, und wobei die Sicherheitsmittel **dadurch gekennzeichnet sind, dass** sie konfiguriert sind, zwischen Datenpaketübertragungsformen zu unterscheiden, wobei die Übertragungsformen Unicast-, Multicast-, oder Broadcast-Übertragungsformen sind, um wahlweise einen Zugang bestimmter Übertragungsformen ins Netzwerk im öffentlichen Bereich zu steuern.

2. Zugangspunktgerät (20) gemäß Anspruch 1, wobei die Sicherheitsmittel eine Liste von Klassifizierungen für Client-Geräte (25) aufweisen und wobei die Sicherheitsmittel konfiguriert sind, diese mit den im Client-Datenpaket enthaltenen Klassifizierungsinformationen zu vergleichen und das Datenpaket zu verwerfen, wenn die Klassifizierungsinformationen den in der Liste enthaltenen entsprechen.

3. Zugangspunktgerät (20) gemäß einem der vorhergehenden Ansprüche, wobei die Sicherheitsmittel konfiguriert sind, eines oder mehrere Datenpaketdatenfelder oder Teile von Datenfeldern mit Feldern von für das Netzwerk zugelassenen Übertragungsformen zu vergleichen und diese Datenpakete, die den Feldern, oder Teilen von Feldern einer für das Netzwerk zugelassenen Form entsprechen, weiter zu leiten.

4. Zugangspunktgerät (20) gemäß einem der vorhergehenden Ansprüche, wobei die Sicherheitsmittel konfiguriert sind, ein Antwortdatenpaket zurück zum Client-Gerät (25) in Reaktion auf eine bestimmte Form von Datenpaketübertragung vom Client-Gerät (25) zu senden.

5. Zugangspunktgerät (20) gemäß einem der vorhergehenden Ansprüche, wobei das Zugangspunktgerät (20) eingerichtet ist, im Namen eines Netzwerkgeräts zu antworten.

6. Zugangspunktgerät (20) gemäß Anspruch 5, wobei das Netzwerkgerät ein beschränktes Netzwerkgerät ist.

7. Zugangspunktgerät (20) gemäß einem der vorhergehenden Ansprüche, wobei das Zugangspunktgerät (20) Sicherheitsmittel aufweist, die eingerichtet sind, Abbildungsinformationen eines oder mehrerer zugelassener Netzwerkgeräte (40) einem Client-Gerät (25) in Reaktion auf ein Client-Datenpaket, das ein beschränktes Netzwerkgerät betrifft, bereit zu stellen.

8. Zugangspunktgerät (20) gemäß Anspruch 7, wobei die Sicherheitsmittel eingerichtet sind, eine ARP-Übertragung in Reaktion auf ein Datenpaket, das für ein beschränktes Netzwerkgerät bestimmt ist, zurück zu einem Client-Gerät (25) zu senden.

9. Zugangspunktgerät (20) gemäß Anspruch 7 oder 8, wobei die Sicherheitsmittel eingerichtet sind, eine Proxy-ARP-Antwortübertragung in Reaktion auf eine ARP-Anforderung vom Client-Gerät (25) zurück zu einem Client-Gerät (25) zu senden, wobei die Proxy-ARP-Antwort die Verbindungsschichtadresse eines oder mehrer zugelassener Netzwerkgeräte (40) enthält.

10. Zugangspunktgerät (20) gemäß Anspruch 9, wobei die Verbindungsschichtadresse eine MAC-Adresse ist.

11. Zugangspunktgerät (20) gemäß einem der vorhergehenden Ansprüche, wobei die Sicherheitsmittel konfiguriert sind, eine Unicast-ARP-Antwort von einem Client-Gerät (25) in Reaktion auf eine autorisierte ARP Anforderung zu anzunehmen.

12. Zugangspunktgerät (20) gemäß einem der vorhergehenden Ansprüche, wobei die Sicherheitsmittel konfiguriert sind, das Datenpaket für eine weiter Übertragung basierend auf dem ursprünglichen Ziel des Datenpakets zu modifizieren.

13. Zugangspunktgerät (20) gemäß einem der vorhergehenden Ansprüche, wobei die Sicherheitsmittel konfiguriert sind, das Datenpaket zur weiteren Übertragung basierend auf der Übertragungsform zu modifizieren.

14. Zugangspunktgerät (20) gemäß Anspruch 12 oder 13, wobei die Sicherheitsmittel konfiguriert sind, ein Datenpaket zur Übertragung entlang des Netzwerks neu zu erzeugen und das ursprüngliche Client-Datenpaket zu verwerfen.

15. Zugangspunktgerät (20) gemäß Anspruch 12 oder 13, wobei die Sicherheitsmittel konfiguriert sind, eine Klassifizierung eines zulässigen Netzwerkgeräts (40) zu ersetzen/einzufügen.

16. Zugangspunktgerät (20) gemäß Anspruch 14 oder 15, wobei die Sicherheitsmittel konfiguriert sind, auch die ursprüngliche Zieladresse oder Adressen des Datenpakets weiter zu leiten, sodass das Datenpaket nachfolgend zu seinem/seinen ursprünglichen Ziel oder Zielen weitergeleitet werden kann.

17. Zugangspunktgerät (20) gemäß einem der vorhergehenden Ansprüche, wobei die Sicherheitsmittel konfiguriert sind, eine Genehmigung von einem oder mehreren Client-Geräten (25) dahingehend zu ersuchen, ob das Zugangspunktgerät (20) bestimmte Übertragungsformen an das oder jedes Client-Gerät (25) weiterleiten soll und im positiven Fall, das Zugangspunktgerät (20) konfiguriert sein wird, solche Übertragungen weiter zu leiten.

18. Zugangspunktgerät (20) gemäß einem der vorhergehenden Ansprüche, wobei die Sicherheitsmittel eingerichtet sind, die sich unterscheidenden Übertragungsformen zu analysieren und jeder sich unterscheidenden Formen anzupassen, um dem Netzwerk Datenpakete mit demselben Gesamtaufbau und Datenpaketlänge zur Verfügung zu stellen.

19. Zugangspunktgerät (20) gemäß einem der vorhergehenden Ansprüche, wobei das Client-Datenpaket, das durch das Zugangspunktgerät (20) empfangen wurde, Protokollfelder aufweist, die einem Standard protokoll entsprechen, und wobei die Sicherheitsmittel eingerichtet sind, den Inhalt eines oder mehrer der Protokollfelder zu ändern, um ein modifiziertes Client-Datenpaket zu erzeugen, das weiter einem Standardprotokoll entspricht.

20. Zugangspunktgerät (20) gemäß Anspruch 19, wobei das Client-Datenpaket, das durch das Zugangspunktgerät (20) empfangen wurde und modifizierte Client-Datenpaket demselben Standardprotokoll entsprechen.

21. Zugangspunktgerät (20) gemäß Anspruch 19, wobei das Client-Datenpaket, das durch das Zugangspunktgerät (20) empfangen wurde, und das modifizierte Client-Datenpaket unterschiedlichen Standardprotokollen entsprechen.

22. Zugangspunktgerät (20) gemäß einem der vorhergehenden Ansprüche, wobei die Sicherheitsmittel konfiguriert sind, eine Eigenschaft des Datenpakets zu berücksichtigen und basierend auf der Eigenschaft das Datenpaket zu konfigurieren, um zu einem bestimmten zugelassenen Netzwerkgerät (40) geleitet zu werden.

23. Zugangspunktgerät (20) gemäß einem der vorhergehenden Ansprüche, wobei die Sicherheitsmittel eingerichtet sind, den Umfang von zu einem bestimmten zugelassenen Netzwerkgerät (40) innerhalb einer bestimmten Zeit gesendeter Übertragungen zu überwachen und Datenpakete zu einem anderen zugelassenen Netzwerkgerät gemäß dem Umfang von Übertragungen, die an das bestimmte zugelassenen Netzwerkgerät innerhalb der Zeit gesendet wurden, um zu leiten.

24. Zugangspunktgerät (20) gemäß Anspruch 23, wobei ein Zugangspunktgerät eingerichtet ist, mit einem oder mehreren Zugangspunktgeräten zu kommunizieren, um ein optimales gemeinsames Nutzen von Ressourcen zu bestimmen.

25. Zugangspunktgerät (20) gemäß einem der vorhergehenden Ansprüche, wobei die Sicherheitsmittel konfiguriert sind, ein Nicht-Standard-Protokoll zur Übertragung zwischen dem Client-Gerät (25) und dem Zugangspunktgerät (20) zu anzunehmen und Client-Geräteübertragungen eines Nicht-Standard-Protokolls in Übertragungen eines Industrie-Standard-Protokolls für das Netzwerk zu konfigurieren.

26. Zugangspunktgerät (20) gemäß einem der vorhergehenden Ansprüche, wobei die Sicherheitsmittel konfiguriert sind, eine Unicast-ARP-Antwort von einem Client-Gerät (25) in Reaktion auf eine autorisierte ARP-Anforderung anzunehmen.

27. Netzwerk im öffentlichen Bereich aufweisend das Zugangspunktgerät (20) gemäß einem der vorhergehenden Ansprüche.

28. Verfahren zur Bereitstellung von Sicherheit für ein Netzwerks im öffentlichen Bereich, wobei das Verfahren in einem Zugangspunktgerät durchgeführt wird, wobei das Verfahren aufweist Einrichten, um Datenpakete von einer Vielzahl von Client-Geräten (25) zu empfangen, um diese entlang des Netzwerks im öffentlichen Bereich zu übertragen, wobei die/das Quelle/Ziel von Datenpaketen berücksichtigt wird, um das Weiterleiten/Verwerfen von einem Datenpaket dahingehend zu berücksichtigen, ob das Datenpaket von einem Client-Gerät (25) stammt und für ein Client-Gerät bestimmt ist, Unterscheiden zwischen Datenpaketübertragungsformen, wobei die Übertragungsformen Unicast-, Mulitcast-, oder Broadcast-Übertragungsformen sind, um wahlweise Zugang von bestimmten Übertragungsformen ins Netzwerks im öffentlichen Bereich zu steuern, und Senden eines Antwortdatenpakets zum Client-Gerät in Reaktion auf ein Datenpaket, das für ein nicht zugelassenes Netzwerkgerät bestimmt ist und Nichtweiterleiten des Datenpakets, das für das nicht zugelassene Netzwerkgerät bestimmt ist, ins Netzwerks im öffentlichen Bereich.

## Revendications

1. Dispositif de point d'accès (20) agencé pour recevoir des paquets de données d'une pluralité de dispositifs clients (25) et les transmettre dans un réseau public dans lequel le dispositif de point d'accès (20) comprend des moyens de sécurité agencés pour considérer la source/destination des paquets de données et commander le transfert/abandon d'un paquet de données selon que le paquet de données provient d'un dispositif client (25) et est destiné à un dispositif client (25), dans lequel les moyens de sécurité sont configurés pour renvoyer un paquet de données de réponse au dispositif client (25) en réponse à un paquet de données destiné à un dispositif de réseau non permissible dans le réseau public, et **caractérisé par le fait que** les moyens de sécurité sont configurés pour différencier entre des formes de transmission de paquets de données, des formes de transmission étant des formes de transmission unicast, multicast ou broadcast, pour commander sélectivement l'accès de certaines formes de transmission dans le réseau public.

2. Dispositif de point d'accès (20) selon la revendication 1, dans lequel les moyens de sécurité comprennent une liste de classificateurs pour des dispositifs clients (25) et les moyens de sécurité sont configurés pour comparer ceux-ci aux informations de classificateurs contenues dans le paquet de donnés client, et abandonner le paquet de donnés client si les informations de classificateurs correspondent à celles contenues dans la liste.

3. Dispositif de point d'accès (20) selon l'une quelconque des revendications précédentes, dans lequel les moyens de sécurité sont configurés pour comparer un ou plusieurs champs de données de paquets de données, ou des parties de champs de données, à des champs pour des formes de transmission permissibles dans le réseau et transférer les paquets de données qui correspondent aux champs, ou à des parties de champs, d'une forme permissible dans le réseau.

4. Dispositif de point d'accès (20) selon l'une quelconque des revendications précédentes, dans lequel les moyens de sécurité sont configurés pour renvoyer un paquet de données de réponse au dispositif client (25) en réponse à une forme particulière de transmission de paquets de données du dispositif client (25).

5. Dispositif de point d'accès (20) selon l'une quelconque des revendications précédentes, dans lequel le dispositif de point d'accès (20) est agencé pour répondre pour le compte d'un dispositif de réseau.

6. Dispositif de point d'accès (20) selon la revendication 5, dans lequel le dispositif de réseau est un dispositif de réseau restreint.

7. Dispositif de point d'accès (20) selon l'une quelconque des revendications précédentes, dans lequel le dispositif de point d'accès (20) comprend des moyens de sécurité agencés pour fournir des informations de mappage d'un ou plusieurs dispositifs de réseau permis (40) à un dispositif client (25) en réponse à un paquet de donnés client concernant un dispositif de réseau restreint.

8. Dispositif de point d'accès (20) selon la revendication 7, dans lequel les moyens de sécurité sont agencés pour renvoyer une transmission ARP à un dispositif client (25) en réponse à un paquet de données destiné à un dispositif de réseau restreint.

9. Dispositif de point d'accès (20) selon la revendication 7 ou 8, dans lequel les moyens de sécurité sont agencés pour renvoyer une transmission de réponse ARP proxy à un dispositif client (25) en réponse à une demande ARP du dispositif client (25), ladite réponse ARP proxy contenant l'adresse de couche de liaison d'un ou plusieurs dispositifs de réseau permis (40).

10. Dispositif de point d'accès (20) selon la revendication 9, dans lequel l'adresse de couche de liaison est l'adresse MAC.

11. Dispositif de point d'accès (20) selon l'une quelconque des revendications précédentes, dans lequel les moyens de sécurité sont configurés pour accepter une réponse ARP unicast d'un dispositif client (25) en réponse à une demande ARP autorisée.

12. Dispositif de point d'accès (20) selon l'une quelconque des revendications précédentes, dans lequel les moyens de sécurité sont configurés pour modifier le paquet de données pour une transmission en avant sur la base de la destination d'origine du paquet de données.

13. Dispositif de point d'accès (20) selon l'une quelconque des revendications précédentes, dans lequel les moyens de sécurité sont configurés pour modifier le paquet de données pour une transmission en avant sur la base de la forme de transmission.

14. Dispositif de point d'accès (20) selon la revendication 12 ou 13, dans lequel les moyens de sécurité sont configurés pour régénérer un paquet de données pour transmission dans le réseau et abandonner le paquet de donnés client d'origine.

15. Dispositif de point d'accès (20) selon la revendication 12 ou 13, dans lequel les moyens de sécurité sont configurés pour substituer/insérer un classificateur d'un dispositif de réseau permis (40).

16. Dispositif de point d'accès (20) selon la revendication 14 ou 15, dans lequel les moyens de sécurité sont configurés pour également transférer l'adresse ou les adresses de destination d'origine du paquet de données de sorte que le paquet de données puisse être ensuite transféré à sa destination ou à ses destinations d'origine.

17. Dispositif de point d'accès (20) selon l'une quelconque des revendications précédentes, dans lequel les moyens de sécurité sont configurés pour demander la permission à un ou plusieurs dispositifs clients (25) pour que le dispositif de point d'accès (20) transfère certaines formes de transmission au dispositif client (25) ou à chaque dispositif client (25), et dans le cas positif, le dispositif de point d'accès (20) est configuré pour transférer de telles transmissions.

18. Dispositif de point d'accès (20) selon l'une quelconque des revendications précédentes, dans lequel les moyens de sécurité sont agencés pour analyser les différentes formes de transmission et adapter chacune de ces différentes formes pour fournir des paquets de données au réseau avec la même construction globale et la même longueur de paquet de données.

19. Dispositif de point d'accès (20) selon l'une quelconque des revendications précédentes, dans lequel le paquet de donnés client reçu par le dispositif de point d'accès (20) comprend des champs de protocole conformes à un protocole standard et dans lequel les moyens de sécurité sont agencés pour altérer le contenu d'un ou plusieurs des champs de protocole pour produire un paquet de donnés client modifié toujours conforme à un protocole standard.

20. Dispositif de point d'accès (20) selon la revendication 19, dans lequel le paquet de donnés client reçu par le dispositif de point d'accès (20) et le paquet de donnés client modifié sont conformes au même protocole standard.

21. Dispositif de point d'accès (20) selon la revendication 19, dans lequel le paquet de donnés client reçu par le dispositif de point d'accès (20) et le paquet de donnés client modifié sont conformes à différents protocoles standards.

22. Dispositif de point d'accès (20) selon l'une quelconque des revendications précédentes, dans lequel les moyens de sécurité sont configurés pour considérer une caractéristique du paquet de données et sur la base de la caractéristique configurer le paquet de données pour le diriger vers un dispositif de réseau permis particulier (40).

23. Dispositif de point d'accès (20) selon l'une quelconque des revendications précédentes, dans lequel les moyens de sécurité sont agencés pour surveiller le volume de transmissions envoyées à un dispositif de réseau permis particulier (40) pendant un temps particulier et rediriger des paquets de données vers un dispositif de réseau permis différent en fonction du volume de transmissions envoyées au dispositif de réseau permis particulier pendant le temps.

24. Dispositif de point d'accès (20) selon la revendication 23, dans lequel un dispositif de point d'accès est agencé pour communiquer avec un ou plusieurs dispositifs de point d'accès pour déterminer un partage optimal de ressources.

25. Dispositif de point d'accès (20) selon l'une quelconque des revendications précédentes, dans lequel les moyens de sécurité sont configurés pour accepter un protocole non standard pour des transmissions entre le dispositif client (25) et le dispositif de point d'accès (20), et pour configurer les transmissions de dispositif client de protocole non standard en transmissions de protocole standard sectoriel pour le réseau.

26. Dispositif de point d'accès (20) selon l'une quelconque des revendications précédentes, dans lequel les moyens de sécurité sont configurés pour accepter une réponse ARP unicast d'un dispositif client (25) en réponse à une demande ARP autorisée.

27. Réseau public comprenant le dispositif de point d'accès (20) selon l'une quelconque des revendications précédentes.

28. Procédé destiné à assurer la sécurité d'un réseau public, le procédé étant effectué dans un dispositif de point d'accès, le procédé comprenant l'étape consistant à agencer pour recevoir des paquets de données d'une pluralité de dispositifs clients (25) pour les transmettre dans le réseau public dans lequel la source/destination de paquets de données sont considérées pour contrôler le transfert/abandon d'un paquet de données selon que le paquet de données provient d'un dispositif client (25) et est destiné à un dispositif client, l'étape consistant à différencier entre des formes de transmission de paquets de données, des formes de transmission étant des formes de transmission unicast, multicast ou broadcast, pour commander sélectivement l'accès de certaines formes de transmission dans le réseau public, et l'étape consistant à renvoyer un paquet de données de réponse au dispositif client en réponse à un paquet de données destiné à un dispositif de réseau non permis et ne pas transférer le paquet de données destiné au dispositif de réseau non permis dans le réseau public.
